# EUROPEAN PATENT APPLICATION

(11) **EP 3 971 728 A1**
(43) Date of publication of application: **23.03.2022**
(21) Application number: 21160993.8
(22) Date of filing: 05.03.2021
(51) Int. Cl.: G06F 16/2458, G06F 16/25, G06F 16/27

(54) **METHOD, DEVICE, APPARATUS OF FEDERATED COMPUTING, AND STORAGE MEDIUM**

(30) Priority: 21.09.2020 CN 202010997997
(71) Applicant: BEIJING BAIDU NETCOM SCIENCE TECHNOLOGY CO., LTD., No.10 Shangdi 10th Street Haidian District Beijing 100085 (CN)
(72) Inventor: LV, Liangliang, Beijing, 100085 (CN); FENG, Zhi, Beijing, 100085 (CN); SONG, Chuanyuan, Beijing, 100085 (CN)
(74) Representative: Carpmaels & Ransford LLP

(57) **Abstract**

The present disclosure provides a method of federated computing. The method of federated computing includes: acquiring a plurality of metadata from a plurality of computing nodes and publishing the plurality of metadata; determining, from the plurality of computing nodes, at least two computing nodes that agree to execute a federated computing task, wherein the at least two computing nodes are computing nodes that agree to execute the federated computing task based on the plurality of metadata; receiving the federated computing task submitted by at least one of the at least two computing nodes, and splitting the federated computing task into a plurality of subtasks; and distributing the plurality of subtasks to the at least two computing nodes so as to execute the plurality of subtasks between the at least two computing nodes. The present disclosure also provides a device, an apparatus of federated computing, and a non-transitory storage medium.

## Description

### CROSS REFERENCE TO RELATED APPLICATIONS

This application claims priority to the Chinese Patent Application No. 202010997997.8 filed on September 21, 2020, which is incorporated herein by reference in its entirety.

### TECHNICAL FIELD

The present disclosure relates to a field of data processing, and in particular to a field of federated computing for big data, and more particularly to a method, a device, an apparatus of federated computing, and a non-transitory storage medium.

### BACKGROUND

An analysis technology based on massive data is more and more restricted by a poor data flow. In practice, the massive data is usually owned by multiple entities. In order to get more accurate data analysis results, it is necessary to perform federated computing on a basis of data warehouses of multiple entities. The federated computing implements computing on multiple separate entity data warehouses based on data security and privacy protection technology, which may realize data sharing and ensure data privacy security. However, a lot of preparatory work needs to be done before the federal computing. For example, it is necessary to know the data in the data warehouse of other entities in advance by means of an investigation, a negotiation, and a consultation, so as to determine whether the data in the data warehouse is required data or not. This requires a lot of manpower, material resources, and time, which affects an overall performance of the federated computing.

### SUMMARY

In view of this, the present disclosure provides a method, a device, an apparatus of federated computing, and a non-transitory storage medium.

A first aspect of the present disclosure provides a method of federated computing, comprising: acquiring a plurality of metadata from a plurality of computing nodes and publishing the plurality of metadata, wherein the metadata indicates features of data in a data warehouse of the computing node; determining, from the plurality of computing nodes, at least two computing nodes that agree to execute a federated computing task, wherein the at least two computing nodes are computing nodes that agree to execute the federated computing task based on the plurality of metadata; receiving the federated computing task submitted by at least one of the at least two computing nodes, and splitting the federated computing task into a plurality of subtasks; and distributing the plurality of subtasks to the at least two computing nodes so as to execute the plurality of subtasks between the at least two computing nodes.

A second aspect of the present disclosure provides a method of federated computing, comprising: acquiring a plurality of metadata from a coordination node, wherein the plurality of metadata are uploaded to the coordination node by a plurality of computing nodes, and the metadata of each computing node indicates features of data in a data warehouse of an associated computing node; determining, from the plurality of computing nodes, a computing node that executes a first federated computing task cooperatively, as a data provider node, according to the plurality of metadata; submitting the first federated computing task to the coordination node, so that the coordination node splits the first federated computing task into a plurality of first subtasks; and receiving at least one first subtask in the plurality of first subtasks from the coordination node, and executing the at least one first subtask in cooperation with the data provider node.

A third aspect of the present disclosure provides a device of federated computing, comprising: a metadata management module configured to acquire a plurality of metadata from a plurality of computing nodes and publish the plurality of metadata, wherein the metadata indicates features of data in a data warehouse of the computing node; a node determination module configured to determine, from the plurality of computing nodes, at least two computing nodes that agree to execute a federated computing task, wherein the at least two computing nodes are computing nodes that agree to execute the federated computing task based on the plurality of metadata; a task processing module configured to receive the federated computing task submitted by at least one of the at least two computing nodes, and split the federated computing task into a plurality of subtasks; and a task distribution module configured to distribute the plurality of subtasks to the at least two computing nodes so as to execute the plurality of subtasks between the at least two computing nodes.

A fourth aspect of the present disclosure provides an apparatus of federated computing, comprising: a memory in which program instructions are stored; and a processor configured to execute the program instructions to execute the method of federated computing according to the first aspect of the present disclosure.

A fifth aspect of the present disclosure provides an apparatus of federated computing, comprising: a metadata query module configured to acquire a plurality of metadata from a coordination node, wherein the plurality of metadata are uploaded to the coordination node by a plurality of computing nodes, and the metadata of each computing node indicates features of data in a data warehouse of the computing node; a first node determination module configured to determine, from the plurality of computing nodes, a computing node that executes a first federated computing task cooperatively, as a data provider node, according to the plurality of metadata; a task submission module configured to submit the first federated computing task to the coordination node, so that the coordination node splits the first federated computing task into a plurality of first subtasks; a first task execution module configured to receive at least one first subtask in the plurality of first subtasks from the coordination node, and executing the at least one first subtask in cooperation with the data provider node.

A sixth aspect of the present disclosure provides an apparatus of federated computing, comprising: a memory in which program instructions are stored; and a processor configured to execute the program instructions to execute the method of federated computing according to the second aspect of the present disclosure.

A seventh aspect of the present disclosure provides a non-transitory computer-readable storage medium storing computer executable instructions, which are configured to implement the method of federated computing described above when executed.

### BRIEF DESCRIPTION OF THE DRAWINGS

The above and other objects, features and advantages of the present disclosure will be more clearly described by referring to the following drawings, in which:
FIG. 1 schematically illustrates an implementation environment of a method of federated computing according to an embodiment of the present disclosure;
FIG. 2 schematically illustrates a flow chart of a method of federated computing according to an embodiment of the present disclosure;
FIGS. 3A and 3B schematically illustrate a flow chart of a method of federated computing according to another embodiment of the present disclosure;
FIG. 4 schematically illustrates an overall architecture diagram of a method of federated computing according to an embodiment of the present disclosure;
FIG. 5 schematically illustrates an interactive process of a method of federated computing according to an embodiment of the present disclosure;
FIGS. 6A to 6F schematically illustrate screen shots of an interface of a solution implementing a method of federated computing according to an embodiment of the present disclosure;
FIGS. 7 and 8 schematically illustrate a block diagram of a device of federated computing according to an embodiment of the present disclosure;
FIG. 9 schematically illustrates a block diagram of an apparatus of federated computing adapted to execute federated computing according to an embodiment of the present disclosure.

### DETAILED DESCRIPTION

Next, an embodiment of the present disclosure will be described with reference to the accompanying drawings. However, it should be understood that these descriptions are only illustrative and are not intended to limit the scope of the present disclosure. In the following detailed description, many specific details are set forth for ease of explanation to provide a comprehensive understanding of the embodiments of the present disclosure. However, it is obvious that one or more embodiments may also be implemented without these specific details. In addition, in the following description, the description of well-known structures and techniques is omitted to avoid unnecessarily confusing the concepts of the present disclosure.

The terms used herein are for the purpose of describing specific embodiments only and are not intended to limit the present disclosure. The terms "including", "comprising" and the like as used herein indicate the presence of said features, steps, operations, and/or components, but do not exclude the presence or addition of one or more other features, steps, operations, or components.

All terms used herein, including technical and scientific terms, have meanings generally understood by those skilled in the art, unless otherwise defined. It should be noted that the terms used herein should be interpreted as having meanings consistent with the context of this specification and should not be interpreted in an idealized or overly rigid manner.

In a case of using an expression similar to "at least one of A, B and C, etc.", generally speaking, it should be interpreted according to the meaning of the expression commonly understood by those skilled in the art (for example, "a system having at least one of A, B and C" shall be, but not limited to, a system having A alone, a system having B alone, a system having C alone, a system having A and B, a system having A and C, a system having B and C, and/or a system having A, B, C, etc.).

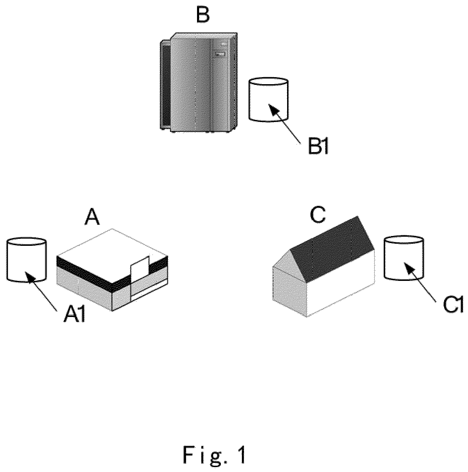

FIG. 1 schematically illustrates an implementation environment of a method of federated computing according to an embodiment of the present disclosure. As shown in FIG. 1, Party A, Party B and Party C are three entity parties with massive private data. For example, Party A is a financial institution with a lot of private financial data, Party B is an Internet institution with a lot of personal privacy data, and Party C is a medical institution with a lot of personal privacy data. The data of the three parties are stored in the local data warehouse A1, B1 and C1 respectively. In order to further improve performances of each model, Party A and Party C desire to cooperate with Party B in federated learning based on data security and privacy protection. An embodiment of the present disclosure provides a method for coordinating the federal learning process among Party A, Party B and Party C.

In the following embodiment, Party A, Party B and Party C that own the data warehouse and desire to ensure the security and privacy of the data are represented by computing nodes. Here, the computing node may be a data user node or a data provider node. The data user node, such as Party A and Party C above, and the data provider node, such as Party B above. In fact, Party A and Party C may also provide data to the outside, and Party B may also obtain data from the outside. Therefore, unless otherwise specified, the computing node itself may be either the data user node or the data provider node. Furthermore, in order to coordinate the federal learning process among Party A, Party B and Party C, a coordination node is provided. Different from the computing nodes such as Party A, Party B and Party C, the coordination node is neither a data provider providing data to the outside nor a data user obtaining data from the outside for computing. The coordination node is only used to provide an overall scheduling for a process of federated computing between computing nodes to optimize the process of federated computing. The method of federated computing according to the embodiment of the present disclosure may be applied to the computing node and the coordination node to realize an overall solution for federated computing.

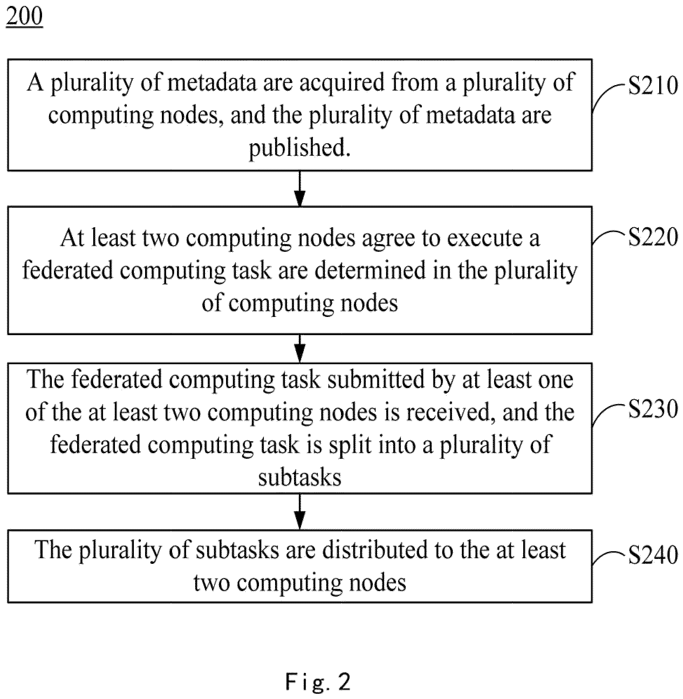

FIG. 2 schematically shows a flow chart of a method 200 of federated computing according to an embodiment of the present disclosure, which may be applied to a coordination node. As shown in FIG. 2, the method 200 of federated computing includes the following steps.

In step S210, a plurality of metadata are acquired from a plurality of computing nodes, and the plurality of metadata are published. The metadata indicates features of data in a data warehouse of the computing node.

In step S220, at least two computing nodes agree to execute a federated computing task are determined in the plurality of computing nodes, and the at least two computing nodes are computing nodes that agree to execute the federated computing task based on the plurality of metadata.

In step S230, the federated computing task submitted by at least one of the at least two computing nodes is received, and the federated computing task is split into a plurality of subtasks.

In step S240, the plurality of subtasks are distributed to the at least two computing nodes so as to execute the plurality of subtasks between the at least two computing nodes.

According to the embodiment, the metadata is used to indicate features of data in a data warehouse of each computing node. According to the embodiment, the metadata may include but not limited to: a name of the data warehouse, a name of a data table stored in the data warehouse, a field name, a field type and a number of rows of the data table, etc. Therefore, a computing node (i.e. a data user node) that desires to acquire a right to use the data in the data warehouse of other computing nodes (i.e. a data provider node) may obtain information of data in data warehouses of other computing nodes by querying the metadata, and further confirm whether the data is the desired data or not. According to the embodiment, the plurality of metadata may be published, and the published metadata may form a data mart to realize a centralized display of the metadata. Therefore, according to the embodiment of the present disclosure, a complicated and time-consuming preliminary investigation work before executing federated computing may be omitted. All the computing nodes joined in the presentation display the metadata indicating data information in a local data warehouse according to specified requirements, which significantly simplifies the preparatory work of federated computing.

After the data user node finds the data it desires through the metadata, it may negotiate with the data provider node that owns the data to fight for a right of data usage.

According to the embodiment, the at least two computing nodes agree to execute a federated computing task are determined in the plurality of computing nodes, may further include: constructing a data approval channel between at least two computing nodes in the plurality of computing nodes so that the at least two computing nodes perform a negotiation of data usage based on the plurality of metadata, via the data approval channel; constructing a task approval channel between the at least two computing nodes that achieve the negotiation of data usage, so that the at least two computing nodes that achieve the negotiation of data usage perform an approval of the federated computing task via the task approval channel; and indicating the at least two computing nodes that achieve the approval of the federated computing task as the at least two computing nodes that agree to execute the federated computing task. In this embodiment, after the data user node finds the data it desires through the metadata, the data user node first uses the data approval channel to negotiate a data use right with the data provider node that owns the data, and only after both parties reach an agreement on the data use right, the data user node may use the task approval channel to negotiate with the data provider node about a willingness of federated modeling. Here, the data approval channel and the task approval channel provide communication channels for an interactive process between the coordination node and the computing node. It should be noted that, in a negotiation of the willingness of federated modeling, specific configurations and parameters of the model may not be considered, but only problems related to the federated modeling and the data usage in the data warehouse are considered.

According to the embodiment, after the willingness of modeling proposed by the data user node is approved by the data provider node, the data user node may configure the model, adjust parameters of the model, and submit a modeling task based on the configured and adjusted model to the coordination node. The coordination node may further split the received modeling task into a plurality of subtasks, and distribute the plurality of subtasks to the data user node and the data provider node respectively for joint execution. In this process, the data user node may configure and adjust the model just as it only uses the local data warehouse for modeling, without considering more interaction details of federated modeling based on multi-party data warehouses. These operations may be handled by the coordination node after the modeling task is submitted to the coordination node. For example, the coordination node may further subdivide the modeling task submitted by the computing node into more detailed subtasks.

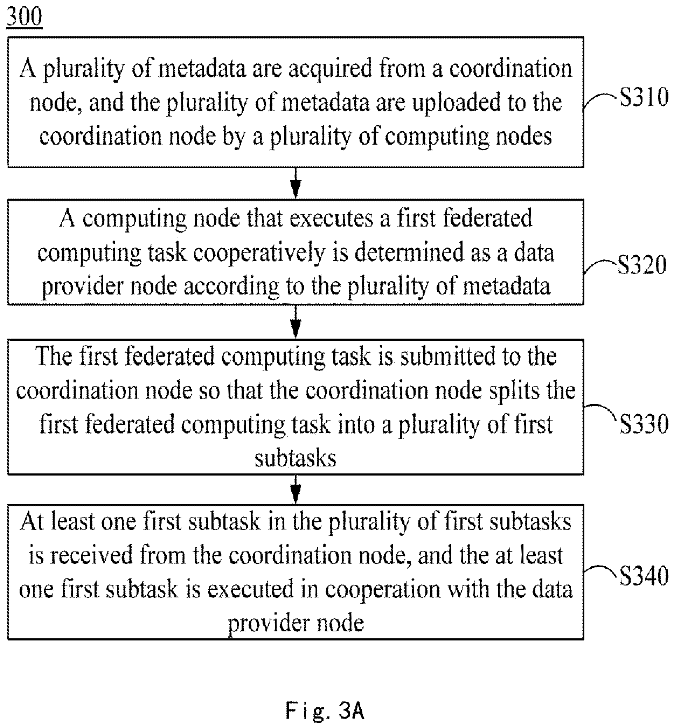

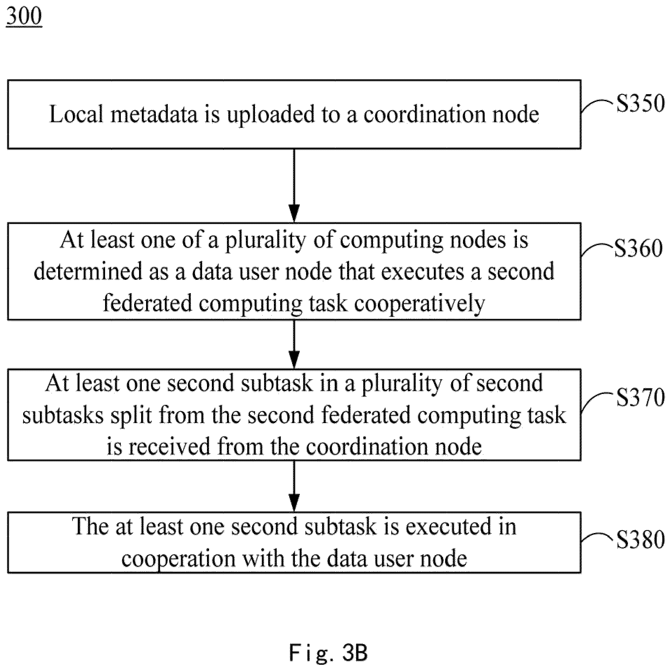

FIGS. 3A and 3B schematically show a flow chart of a method 300 of federated computing according to another embodiment of the present disclosure, which may be applied to a computing node. As shown in FIG. 3A, the method 300 of federated computing includes the following steps.

In step S310, a plurality of metadata are acquired from a coordination node, and the plurality of metadata are uploaded to the coordination node by a plurality of computing nodes, and the metadata of each computing node indicates features of data in a data warehouse of the computing node.

In step S320, a computing node that executes a first federated computing task cooperatively, in the plurality of computing nodes, is determined as a data provider node according to the plurality of metadata.

In step S330, the first federated computing task is submitted to the coordination node so that the coordination node splits the first federated computing task into a plurality of first subtasks.

In step S340, at least one first subtask in the plurality of first subtasks is received from the coordination node, and the at least one first subtask is executed in cooperation with the data provider node.

According to the embodiment, the computing node that desires to perform federated computing, that is, the data user node, may acquire a plurality of metadata through the coordination node, and further learn data in data warehouses owned by other computing nodes through a plurality of metadata. As mentioned above, the metadata may include but not limited to: a name of the data warehouse, a name of a data table stored in the data warehouse, a field name, a field type and a number of rows of the data table, etc. For example, a computing node may roughly know the content of data in the data warehouses of other computing nodes through the name of the data table and the field name of the data table, and may roughly know a type and scale of data through the field type and number of rows of the data table.

Next, after the data user node finds the data required for federated computing, the computing node that provides the data may be determined as the data provider node which executes the first federated computing task cooperatively. Here, the first federated computing task refers to a federated computing task initiated and submitted by the current computing node as the data user node, and the first subtask refers to a subtask split from the first federated computing task. According to the embodiment, in the plurality of computing nodes, a computing node that executes the first federated computing task cooperatively is determined as the data provider node according to the plurality of metadata, may further include: determining, in the plurality of computing nodes, a computing node in which data required to execute the first federated computing task is located, according to the plurality of metadata; performing a negotiation of data usage with the computing node in which the data required to execute the first federated computing task is located, via a data approval channel constructed by the coordination node; performing an approval of the federated computing task with the computing node that achieves the negotiation of data usage, via a task approval channel constructed by the coordination node; and indicating the computing node that achieves the approval of the federated computing task as the data provider node. In this embodiment, the data user node first determines a computing node in which data required for federated computing is located, and then uses the data approval channel to negotiate with the computing node about a right of data usage. Only after both parties reach an agreement on the right of data usage, may the data user node use the task approval channel to negotiate with the computing node about a willingness of federated modeling. As in the previous embodiment, when the data user node further negotiates the willingness of federated modeling with the computing node that achieves a negotiation of data usage via the task approval channel, specific configurations and parameters of the model may not be considered, but only problems related to the federated modeling and the data usage in the data warehouse are considered.

Next, after achieving the willingness of federated modeling and determining the data provider node, the data user node may further configure the model, such as adjusting parameters of the model. According to the embodiment, the data user node establishes a federated computing model based on data in a local data warehouse of the data user node and data in a data warehouse of the determined data provider node, and in a modeling process, the data user node may consider the model in general. For example, according to the embodiment, a virtual model may be established on a basis of the data in the local data warehouse and the data in the data warehouse of the data provider node, so that an effect of the virtual model is consistent with an optimal model established after the data in the data warehouse of the data user node and the data provider node are physically aggregated, and more execution details in the model training don't have to be considered. After the data user node configures the federated computing model, the federated computing task (the first federated computing task) may be submitted to the coordination node, and the coordination node processes the federated computing task. According to the embodiment, the coordination node splits the federated computing task into a plurality of subtasks (the first subtask), which is easy to understand. The data user node and the data provider node may receive at least one subtask from the coordination node respectively, and execute the received subtask cooperatively, so as to execute the federated computing task cooperatively. Subtasks further refine the execution details of federated computing tasks between the data user node and the data provider node. This is actually an operation that needs to be completed jointly by the data user node and the data provider node before it is completed by the coordination node, thus further simplifying the federated computing tasks in the data user node and the data provider node.

In a method of federated computing according to an embodiment of the present disclosure, the metadata is used to indicate features of data in a local data warehouse of each computing node, so as to provide data in data warehouses of other computing nodes to each computing node, which solves a problem that a lot of manpower and events need to be spent for investigation and negotiation before building a federated computing scene, and reduces a modeling cost. In addition, by providing the data approval channel and the task approval channel for computing nodes before modeling, the modeling task is further subdivided after submitting modeling, which simplifies a complex interaction between computing nodes in a process of federated modeling, facilitates to reduce a difficulty of federated computing modeling, and further reduces a cost for modeling.

The method 300 of federated computing in an embodiment shown in FIG. 3A is applied to the data user node. For the data provider node that only provides data for other computing nodes without data use requirements, the method 300 of federated computing is shown in FIG. 3B, including the following steps.

In step S350, local metadata is uploaded to a coordination node, and the local metadata indicates features of data in a local data warehouse.

In step S360, at least one of a plurality of computing nodes is determined as a data user node that executes a second federated computing task cooperatively.

In step S370, at least one second subtask in a plurality of second subtasks split from the second federated computing task is received from the coordination node.

In step S380, the at least one second subtask is executed in cooperation with the data user node.

After connecting (for example, registering) to the coordination node, the data provider node may first upload the metadata indicating data in a local data warehouse to the coordination node. The metadata may be displayed to other computing nodes through publishing. When other computing nodes exist, that is, the data user node desires to use the data in the local data warehouse of the data provider node, it may interact with the data provider node through the data approval channel and the task approval channel provided by the coordination node. According to an embodiment, the data provider node determines at least one of the plurality of computing nodes as the data user node that executes the second federated computing task cooperatively through an interaction with the data user node. Here, the second federated computing task refers to a federated computing task received by current computing node as the data provider node, and the second subtask refers to a subtask split from the second federated computing task.

According to the embodiment, the at least one of a plurality of computing nodes is determined as a data user node that executes a second federated computing task cooperatively, may further include: performing a negotiation of data usage with the at least one of a plurality of computing nodes via a data approval channel constructed by the coordination node; performing an approval of the federated computing task with the computing node that achieves the negotiation of data usage, via a task approval channel constructed by the coordination node; and indicating the computing node that achieves the approval of the federated computing task as the data user node that executes a second federated computing task cooperatively. In a negotiation process, the data provider node may decide whether to approve a data approval and a task approval according to the negotiation content provided by the data user node. If the data provider node does not agree with a data usage request transmitted by the data user node, the data user node may not continue to negotiate task approval. If the data provider node agrees with the data usage request of the data user node, but does not agree with a modeling task request transmitted by the data user node, the data user node may not continue to execute the modeling task. According to the embodiment, if the data provider node agrees the data usage request and the modeling task request of the data user node respectively, that is, a data approval negotiation and a task approval negotiation are achieved between the data provider node and the data user node, the data provider node may receive, from the coordination node, at least one second subtask in a plurality of the second subtasks which are split from the second federated computing task, and execute at least one second subtask in cooperation with the data user node, so as to execute the federated computing task cooperatively.

In practice, most computing nodes may be used as both data user nodes and data provider nodes. Therefore, in general, the method 300 of federated computing including all steps S31 0 to S380 may be applied to the computing nodes. In addition, it should be understood that a sequence number of operation steps in the above embodiment does not indicate an actual execution sequence. In practice, steps S310 to S340 and steps S350 to S380 may be executed in parallel or alternately. For example, regardless of whether the computing node desires to use the data or not, it may upload the metadata used to indicate the data in the local data warehouse to the coordination node after registering to the coordination node, that is, the step S350 is executed before the step S310.

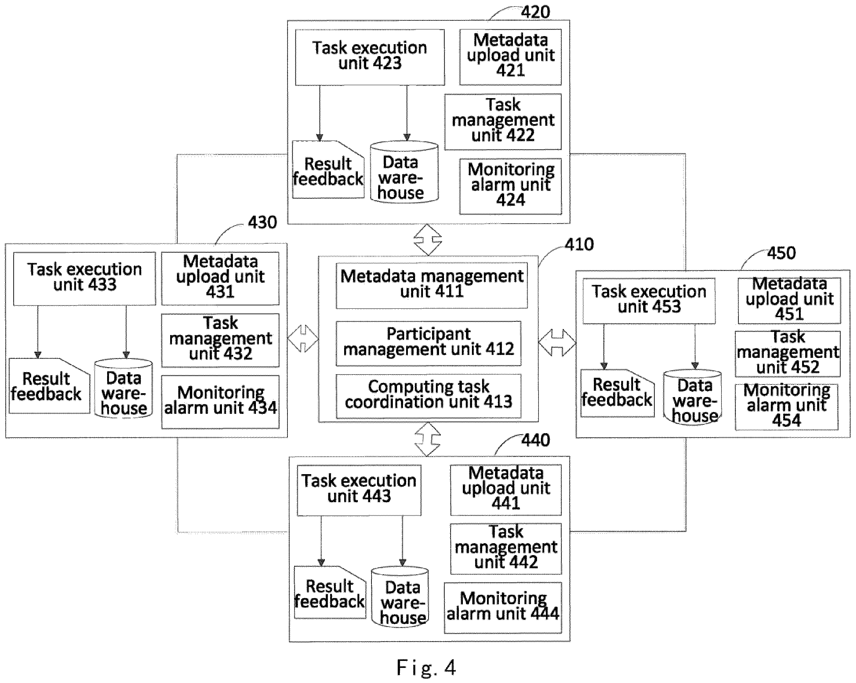

FIG. 4 schematically shows an overall architecture diagram of a method of federated computing according to an embodiment of the present disclosure. In FIG. 4, a coordination node 410 and four computing nodes 420, 430, 440, and 450 are shown schematically. The coordination node 410 is coupled with the computing nodes 420, 430, 440 and 450 respectively for an overall scheduling of federated computing tasks among the computing nodes 420, 430, 440 and 450. The computing nodes 420, 430, 440 and 450 may be coupled with each other to transmit secure data stream between them, which may realize data security and privacy federated computing.

As shown in FIG. 4, the coordination node 410 includes a metadata management unit 411, a participant management unit 412, and a computing task coordination unit 413. The metadata management unit 411 may be used to receive metadata from the computing nodes 420, 430, 440 and 450 and publish the received metadata. The participant management unit 412 may be used to receive registrations of the computing nodes 420, 430, 440 and 450 and create different user management documents for different computing nodes 420, 430, 440 and 450. The participant management unit 412 may also construct a data approval channel and a task approval channel among the computing nodes 420, 430, 440 and 450 according to a request of a data user node in the computing nodes 420, 430, 440 and 450, so as to simplify interactions among the computing nodes 420, 430, 440 and 450. The computing task coordination unit 413 may receive federated computation tasks submitted by the data user nodes in the computation nodes 420, 430, 440 and 450, split the federated computation tasks to form a plurality of detailed subtasks, and distribute the plurality of subtasks to the corresponding computing nodes 420, 430, 440 and 450. After receiving the federated computing task submitted by the data user node and before splitting the federated computing task, the computing task coordination unit 413 may audit whether the federated computing task conforms to a federated computing security specification or not, and reject the federated computing task in response to the federated computing task not conforming to the federated computing security specification. In this way, the security of federated computing may be further guaranteed. The computing task coordination unit 413 may also monitor statuses of the computing nodes 420, 430, 440 and 450, and timely discover faults of the computing nodes 420, 430, 440 and 450.

As shown in FIG. 4, taking the computing node 420 as an example, the computing node 420 includes a metadata upload unit 421, a task management unit 422, a task execution unit 423, and a monitoring alarm unit 424. The metadata upload unit 421 is used to extract features of data in a local data warehouse to generate metadata, and upload the generated metadata to the coordination node 410. The metadata upload unit 421 may also update the metadata according to an update status of the data in the local data warehouse, and upload the updated metadata to the coordination node 410, so that the coordination node 410 may update information of the metadata in time. The task management unit 422 may be used to negotiate data usage approval and modeling task approval with other computing nodes in a process of creating federated computing tasks. The task management unit 422 may also be used to receive the split subtasks from the coordination node 410 and transmit the received subtasks to the task execution unit 423 for execution. The task execution unit 423 is mainly used for executing various federated computing tasks. According to an embodiment of the present disclosure, federated computing tasks may include, but are not limited to, a federated data query, a federated data analysis, and a federated model training executed based on data in the data warehouse of each of at least two computing nodes, and a federated prediction performed according to a model obtained from the federated model training. The monitoring alarm unit 424 is used to monitor a status of a node in real time locally to ensure the security of the federated computing task.

According to an embodiment of the present disclosure, each computing node 420, 430, 440 and 450 is uniformly coordinated and managed by the coordination node 410. Each computing node 420, 430, 440 and 450 may concentrate more resources on the execution and security of federated computing tasks with other computing nodes, and the coordination node 410 may coordinate the interaction with other computing nodes, which is conducive to simplifying the execution of federated computing tasks. In addition, when new computing nodes need to be added, the whole scheme may be easily extended without affecting other computing nodes.

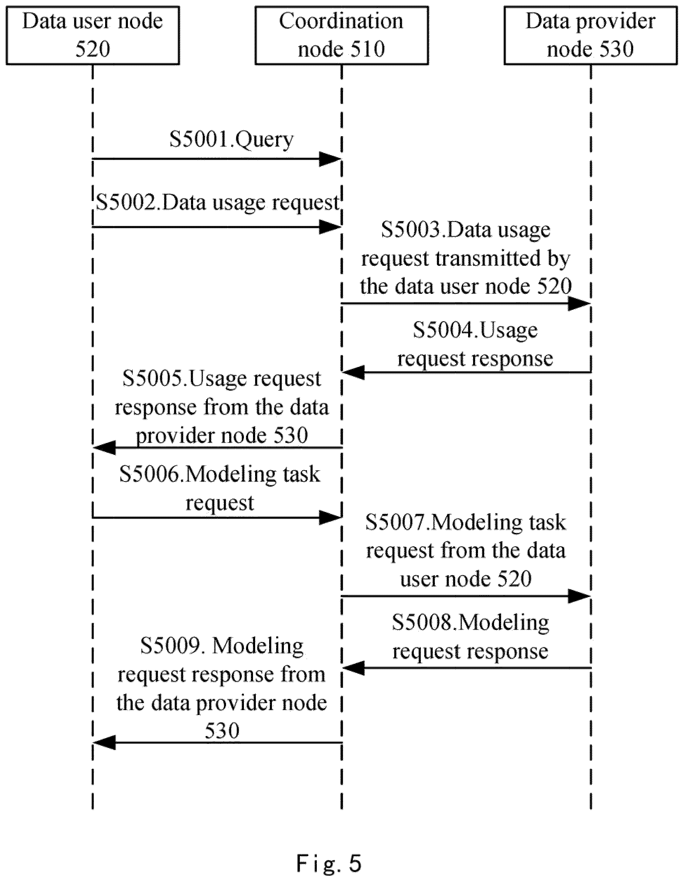

FIG. 5 schematically illustrates an interactive process of a method of federated computing according to an embodiment of the present disclosure. As shown in FIG. 5, in this embodiment, the data user node 520 and the data provider node 530 achieve a negotiation of data usage via a data approval channel constructed by the coordination node 510 between the data user node 520 and the data provider node 530, and achieve an approval of federated computing task via a task approval channel constructed by the coordination node 510 between the data user node 520 and the data provider node 530. The above process is described in detail with reference to FIG. 5.

As shown in FIG. 5, the data user node 520 first queries the metadata published by the coordination node 510 to find the data provider node 530 in which data required to establish the federated computing task is located, as shown in step S5001. Next, the data user node 520 transmits a data usage request to the coordination node 510, and the data usage request includes information of the computing node in which the data required to execute the first federated computing task is located, as shown in step S5002. The coordination node 510 receives the data usage request transmitted by the data user node 520, determines the data provider node 530 in which the data required to execute the federated computing task is located according to the data usage request, and transmits the data usage request to the data provider node 530, as shown in step S5003. The data provider node 530 receives the data usage request transmitted by the data user node 520 from the coordination node 510, and determines whether the data user node 520 is allowed to use data in its local data warehouse or not according to the relevant situation. In response to the data user node 520 being allowed to use the data in its local data warehouse, a usage request response is transmitted to the coordination node 510, as shown in step S5004. The coordination node 510 receives the usage request response from the data provider node 530 and transmits the usage request response to the data user node 520, as shown in step S5005. After receiving the data in the data warehouse of the data provider node 530 that the data provider node 530 allows the data user node 520 to use, the data user node 520 may further transmit a modeling task request to the coordination node 510, as shown in step S5006. The coordination node 510 receives the modeling task request from the data user node 520 and transmits the modeling task request to the data provider node 530, as shown in step S5007. The data provider node 530 receives the modeling task request from the coordination node 510 transmitted by the data user node 520, which is a computing node that achieves a negotiation of data usage, and determines whether the data user node 520 is allowed to use the data in the local data warehouse of the data provider node 530 for modeling or not according to the relevant situation. In response to the data user node 520 being allowed to use the data in the local data warehouse for modeling, a modeling request response is transmitted to the coordination node 510, as shown in step S5008. The coordination node 510 receives the modeling request response from the data provider node 530 and transmits the modeling request response to the data user node 520, as shown in step S5009. After receiving the modeling request response from the coordination node 510, the data user node 520 may continue to configure and adjust the federated computing model.

According to an embodiment of the present disclosure, the data user node 520 and the data provider node 530 perform an approval of data usage and an approval of federal modeling via the coordination node 510. The data user node 520 and the data provider node 530 do not need to consider more communication details, and may complete approvals only through simple query operations, thus simplifying the operation processes of federal modeling. In particular, when a data user node 520 desires to establish a federated computing task with a plurality of data provider nodes 530, or a data provider node 530 provides data for a plurality of data user nodes 520, or a computing node simultaneously acts as a data user node 520 and a data provider node 530 and establishes a federated computing task with a plurality of computing nodes, a scheme according to an embodiment of the present disclosure may significantly simplify the approval process between computing nodes.

In another embodiment of the present disclosure, an overall solution based on the method of federated computing of the preceding embodiments is provided. Each functional step of the method of federated computing of the preceding embodiments may be visualized, and a user interface convenient for operation is provided at the coordination node and the plurality computing nodes, respectively. A main program that may execute the preceding method 200 of federated computing is installed at the coordination node, and an agent program that may execute the preceding method 300 of federated computing is installed at each of the plurality of computing nodes.

The main program in the coordination node is responsible for unified multi task coordination, execution and management, and also provides global metadata management and unified tenant management for computing nodes. It may receive user's federated data analysis or federated machine learning tasks, split an execution plan of federated computing tasks into multi-party joint execution plans, and distribute the multi-party joint execution plans to corresponding computing nodes to execute tasks. The main program in the coordination node is also responsible for task management, tracking and recording task execution, providing query and display. The main program in the coordination node is also responsible for metadata management. After a user's local data warehouse of the computing node joins a federated data warehouse, all metadata information in the federated data warehouse is managed. The main program in the coordination node is also responsible for managing users at the computing nodes registered to the coordination node, which includes but is not limited to: managing all user's information, including user's own information (such as a user name), a location of the user's corresponding computing node, and user permission related information. The main program in the coordination node may also optimize a SQL query. For example, when performing joint trusted data analysis, a performance of query SQL may be optimized, SQL statements with a higher performance may be generated, and the SQL statements are returned to a user execution model at each computing node for execution.

The agent program in the computing node provides functions of task execution and query, as well as a management of a local data warehouse. The agent program in the computing node is responsible for an execution of federated computing tasks, for example, responsible for an execution of multi-party computing tasks, which uses a cryptographic secure multi-party computing protocol, a safe and fast intersection algorithm to execute an operator of a multi-party execution plan. The agent program in the computing node is also responsible for managing the local federated computing tasks, for example, responsible for recording an execution log, managing a completion of tasks, and controlling a number of concurrent tasks. The agent program in the computing node is also responsible for a management of the local data warehouse. For example, the agent program may manage and configure the local data warehouse, and synchronize metadata information to the coordination node regularly, and so on.

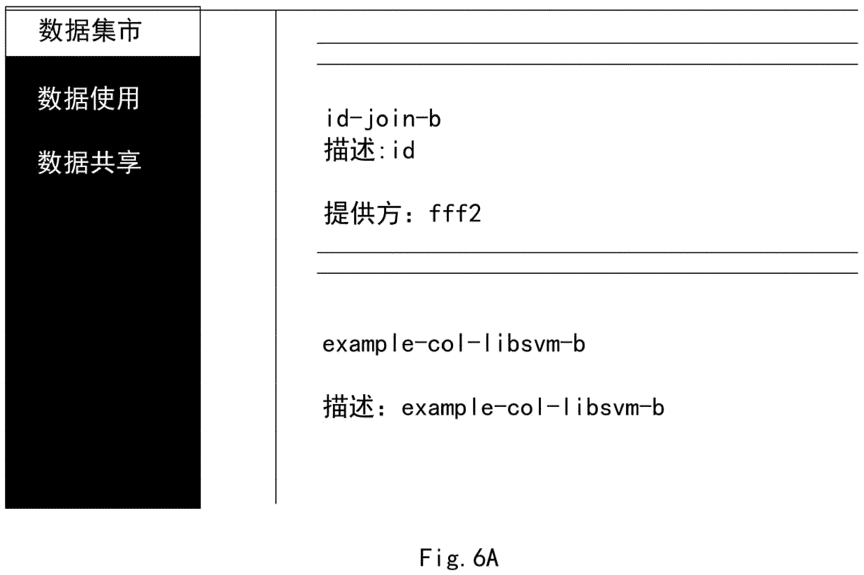

FIGS. 6A to 6F schematically show screen shots of an interface of a solution of a method of federated computing according to an embodiment of the present disclosure, mainly showing an interface local to a computing node.

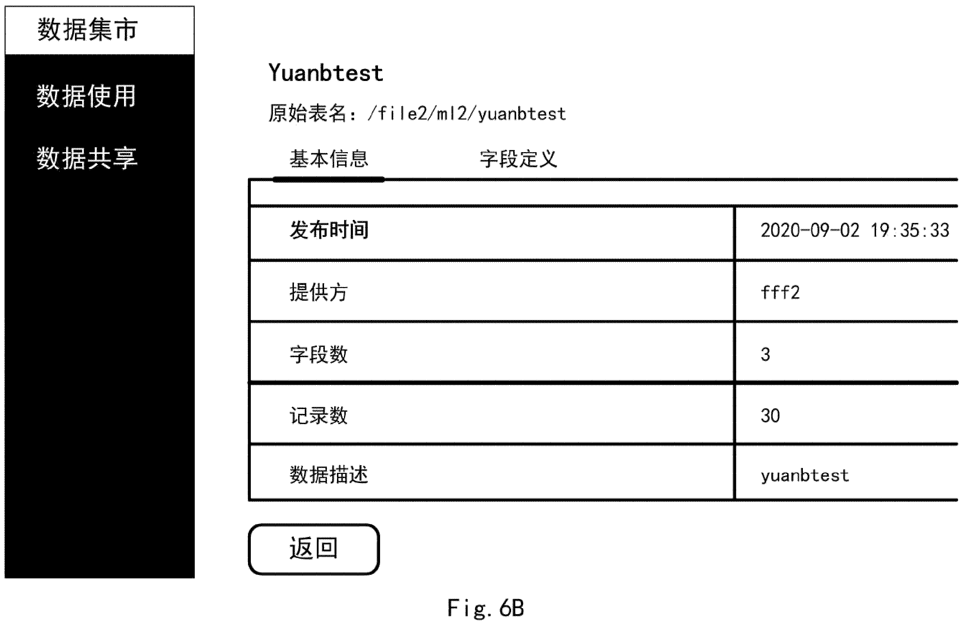

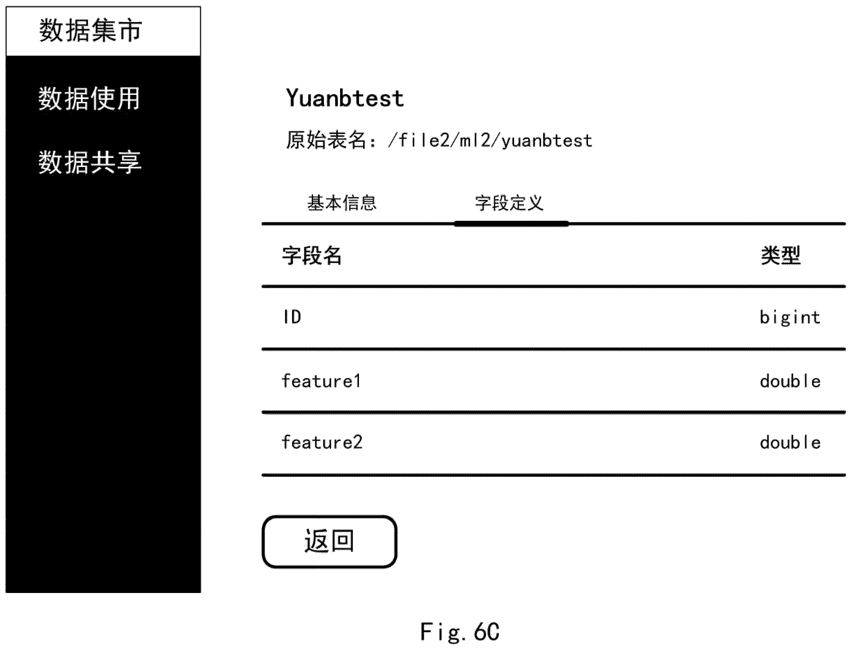

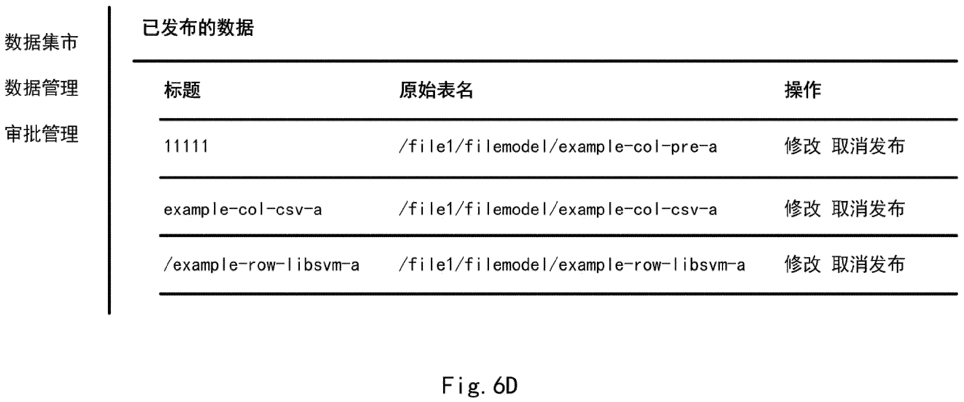

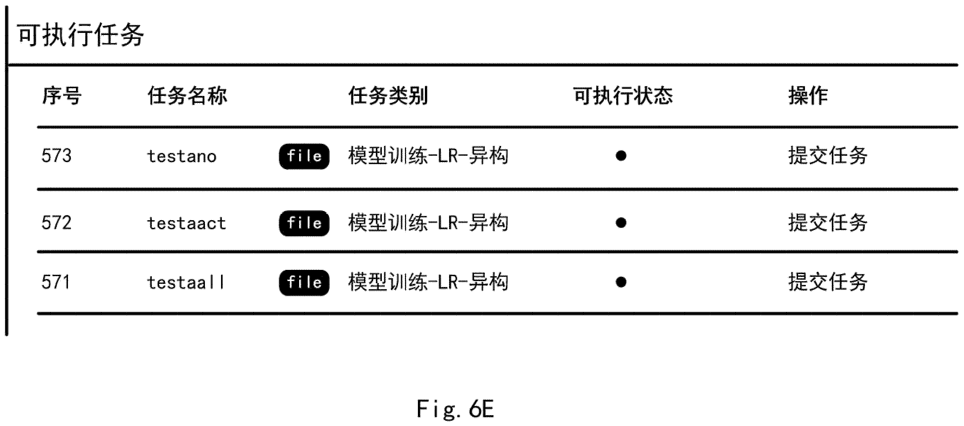

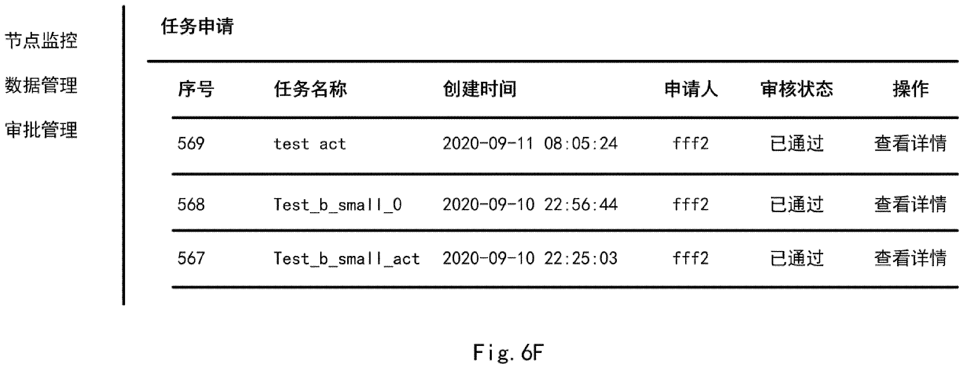

FIG. 6A shows a screen shot of a data mart interface. Users in the computing node may conveniently view locally all metadata lists and information that are published by all local computing nodes and other computing nodes through the data mart. Clicking each record information on the data mart interface to view specific metadata information, as shown in FIG. 6B and FIG. 6C, which provide basic information and field description of the metadata. FIG. 6D shows a screen shot of a data management interface on which users may manage the metadata, for example, publishing metadata or unpublishing the published metadata. FIG. 6E shows a screen shot of a task management interface, which supports users to create, edit, execute and delete tasks, and uniformly manages task lists of users by tenants, and the users may view current user's task list and a corresponding task execution (job) list. FIG. 6F shows a screen shot of an approval management interface. All requests for federated computing tasks using the published metadata of the current user may be notified to the current user, and the user may approve the requests by clicking on the interface. After achieving an approval, the task requester may start to execute a task. At the same time, it provides unified management of approval list, and may modify and reject task approval.

The embodiments of the present disclosure may be applied to a joint trusted security modeling. Different users (located in different computing nodes) may perform a joint security modeling training and testing, and use an obtained model to verify and predict data. The obtained model may also be used to predict risks, improve an ability of risk identification, and reduce a loss of enterprises.

The embodiments of the present disclosure may be applied to joint secure data analysis. Through the joint SQL query and program calculation between different users, the data may not go out of the local, and in a case of ensuring security, the trusted data analysis and calculation may be realized, so as to improve an effect of data federated computing.

The embodiments of the present disclosure may be applied to an intersection of privacy sets. Two users holding their own sets are allowed to calculate the intersection of data sets in their local data warehouses. At the end of computing interaction, one or two parties get a correct intersection, but they don't get any information about the other party's set. This may not only protect a privacy of the collection, but also get correct calculation results to meet needs of users. The contents of the collection include but are not limited to an address book, a genome and ID number of gene diagnosis service users.

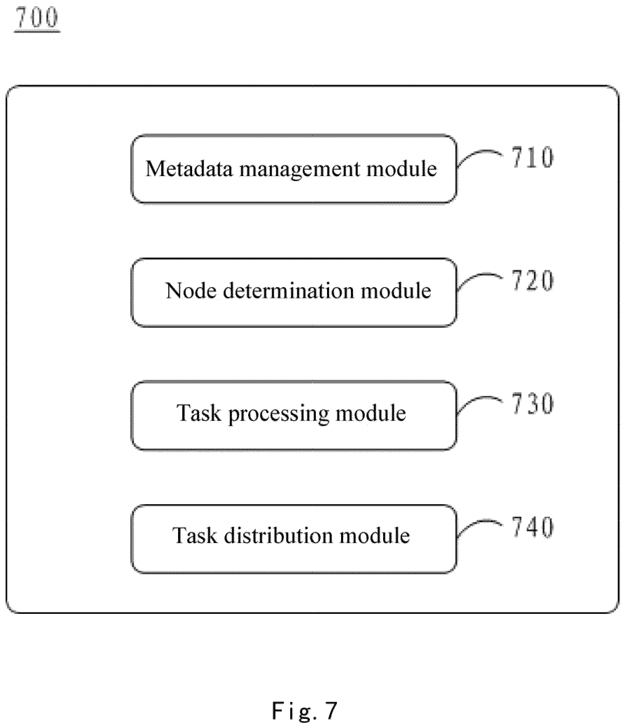

FIG. 7 schematically shows a block diagram of a device 700 of federated computing according to an embodiment of the present disclosure. As shown in FIG. 7, the device 700 of federated computing includes a metadata management module 710, a node determination module 720, a task processing module 730, and a task distribution module 740.

According to an embodiment, the metadata management module 710 is configured to acquire a plurality of metadata from a plurality of computing nodes and publish the plurality of metadata, where the metadata indicates features of data in a data warehouse of the computing node. The node determination module 720 is configured to determine, from the plurality of computing nodes, at least two computing nodes that agree to execute a federated computing task, where the at least two computing nodes are computing nodes that agree to execute the federated computing task based on the plurality of metadata. The task processing module 730 is configured to receive the federated computing task submitted by at least one of the at least two computing nodes, and split the federated computing task into a plurality of subtasks. The task distribution module 740 is configured to distribute the plurality of subtasks to the at least two computing nodes so as to execute the plurality of subtasks between the at least two computing nodes.

Specific operations of the above functional modules may be acquired by referring to the operation steps of the method 200 of federated computing in the preceding embodiments, which will not be repeated here.

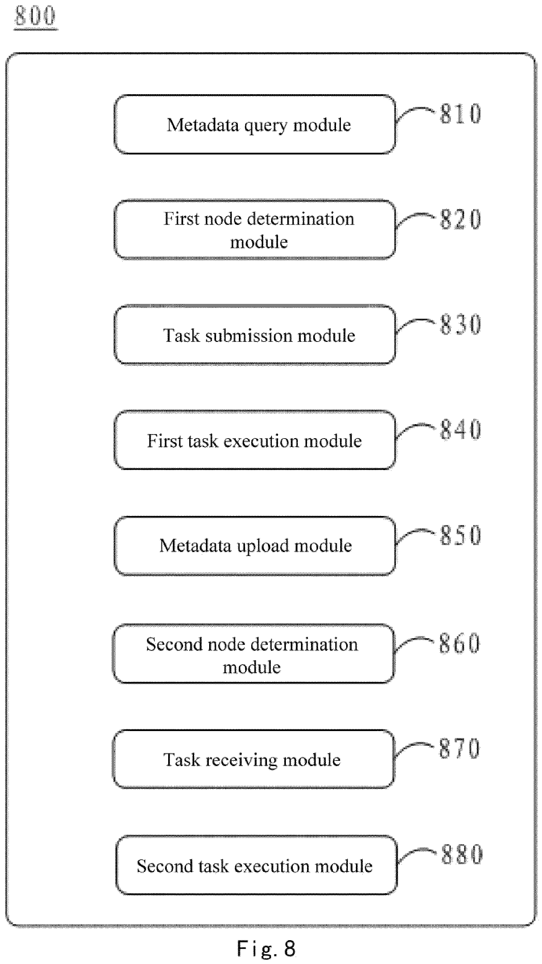

FIG. 8 schematically shows a block diagram of a device of federated computing according to another embodiment of the present disclosure. As shown in FIG. 8, the device 800 of federated computing includes a metadata query module 810, a first node determination module 820, a task submission module 830, a first task execution module 840, a metadata upload module 850, a second node determination module 860, a task receiving module 870, and a second task execution module 880.

According to an embodiment, the metadata query module 810 is configured to acquire a plurality of metadata from a coordination node, where the plurality of metadata are uploaded to the coordination node by a plurality of computing nodes, and the metadata of each computing node indicates features of data in a data warehouse of the computing node. The first node determination module 820 is configured to determine, from the plurality of computing nodes, a computing node that executes a first federated computing task cooperatively, as a data provider node, according to the plurality of metadata. The task submission module 830 is configured to submit the first federated computing task to the coordination node, so that the coordination node splits the first federated computing task into a plurality of first subtasks. The first task execution module 840 is configured to receive at least one first subtask in the plurality of first subtasks from the coordination node, and executing the at least one first subtask in cooperation with the data provider node. The metadata upload module 850 is configured to upload local metadata to the coordination node, where the local metadata indicates features of data in a local data warehouse. The second node determination module 860 is configured to determine at least one of the plurality of computing nodes as a data user node that executes a second federated computing task cooperatively. The task receiving module 870 is configured to receive, from the coordination node, at least one second subtask in the plurality of second subtasks split from the second federated computing task. The second task execution module 880 is configured to execute at least one second subtask in cooperation with the data user node.

Specific operations of the above functional modules may be acquired by referring to the operation steps of the method 300 of federated computing in the preceding embodiments, which will not be repeated here.

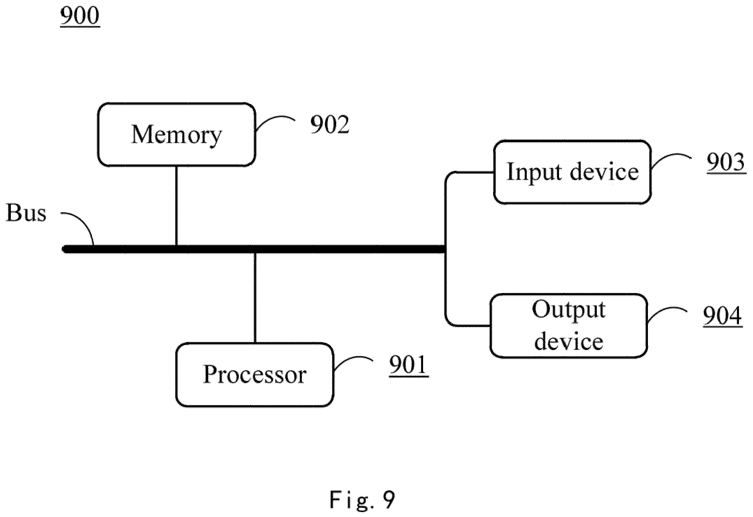

FIG. 9 schematically shows a block diagram of an apparatus 900 of federated computing adapted to execute federated computing according to an embodiment of the present disclosure. The method of federated computing according to an embodiment of the present disclosure may be executed using the apparatus of federated computing shown in FIG. 9.

As shown in FIG. 9, the apparatus 900 of federated computing according to an embodiment of the present disclosure includes a processor 901 and a memory 902. The processor 901 may execute various appropriate actions and processing according to programs or instructions stored in the memory 902. The processor 901 may, for example, include a general-purpose microprocessor (for example, CPU), an instruction set processor and/or a related chipset and/or a special-purpose microprocessor (for example, an application specific integrated circuit (ASIC)), and the like. The processor 901 may also include an on-board memory for caching purposes. The processor 901 may include a single processing unit or multiple processing units for executing different actions of the method flow according to the embodiments of the present disclosure.

The processor 901 and the memory 902 are connected to each other through a bus. The processor 901 executes various operations of the method flow according to the embodiments of the present disclosure by executing the programs in the memory 902. It should be noted that the program may also be stored in one or more memories other than the memory 902. The processor 901 may also execute various operations of the method flow according to the embodiments of the present disclosure by executing the programs stored in the one or more memories.

According to an embodiment of the present disclosure, the apparatus 900 of federated computing may further include an input device 903 and an output device 904, and the input device 903 and the output device 904 are also connected to the bus. In addition, the apparatus 900 of federated computing may further include one or more of the following components: an input section including a keyboard, a mouse, etc.; an output section including a cathode ray tube (CRT), a liquid crystal display (LCD), etc. and a speaker, etc.; a storage section including a hard disk, etc.; and a communication section including a network interface card such as a LAN card, a modem, and the like.

The method flow according to the embodiments of the present disclosure may be implemented as a computer software program. For example, the embodiments of the present disclosure include a computer program product including a computer program carried on a non-transitory computer-readable storage medium. The computer program includes a program code for execution of the method shown in the flowchart. In such an embodiment, the computer program may be downloaded and installed from the network through the communication section, and/or installed from the removable medium. When the computer program is executed by the processor 901, the above-mentioned functions defined in the system of the embodiment of the present disclosure are performed. According to the embodiments of the present disclosure, the above-described systems, apparatuses, devices, modules, units, etc. may be implemented by computer program modules.

The present disclosure also provides a non-transitory computer-readable storage medium, which may be included in the apparatus/device/system described in the above embodiments; or exist alone without being assembled into the apparatus/device/system. The above-mentioned non-transitory computer-readable storage medium carries one or more programs that when executed by the processor 901, perform the method according to the embodiments of the present disclosure.

According to the embodiments of the present disclosure, the computer-readable storage medium may be a computer non-volatile computer-readable storage medium, for example, may include but not limited to: portable computer disk, hard disk, random access memory (RAM), read-only memory (ROM), erasable programmable read-only memory (EPROM or flash memory), portable compact disk read-only memory (CD-ROM), optical storage device, magnetic storage device, or any suitable combination of the above. In the present disclosure, the computer-readable storage medium may be any tangible medium that includes or stores programs that may be used by or in combination with an instruction execution system, apparatus, or device.

The flowcharts and block diagrams in the accompanying drawings illustrate the possible architecture, functions, and operations of the system, method, and computer program product according to various embodiments of the present disclosure. In this regard, each block in the flowcharts or block diagrams may represent a part of a module, program segment, or code, which part includes one or more executable instructions for implementing the specified logical function. It should also be noted that, in some alternative implementations, the functions noted in the blocks may also occur in a different order than that noted in the accompanying drawings. For example, two blocks shown in succession may actually be executed substantially in parallel, or they may sometimes be executed in the reverse order, depending on the functions involved. It should also be noted that each block in the block diagrams or flowcharts, and the combination of blocks in the block diagrams or flowcharts, may be implemented by a dedicated hardware-based system that performs the specified functions or operations, or may be implemented by a combination of dedicated hardware and computer instructions.

Those skilled in the art may understand that the various embodiments of the present disclosure and/or the features described in the claims may be combined in various ways, even if such combinations are not explicitly described in the present disclosure. In particular, without departing from the spirit and teachings of the present disclosure, the various embodiments of the present disclosure and/or the features described in the claims may be combined in various ways. All these combinations fall within the scope of the present disclosure.

The embodiments of the present disclosure have been described above. However, these embodiments are for illustrative purposes only, and are not intended to limit the scope of the present disclosure. Although the embodiments have been described separately above, this does not mean that measures in the respective embodiments cannot be used in combination advantageously. The scope of the present disclosure is defined by the appended claims and their equivalents. Without departing from the scope of the present disclosure, those skilled in the art can make various substitutions and modifications, and these substitutions and modifications should all fall within the scope of the present disclosure.

## Claims

1. A method of federated computing, comprising:
acquiring a plurality of metadata from a plurality of computing nodes and publishing the plurality of metadata, wherein the metadata indicates features of data in a data warehouse of the computing node;
determining, from the plurality of computing nodes, at least two computing nodes that agree to execute a federated computing task, wherein the at least two computing nodes are computing nodes that agree to execute the federated computing task based on the plurality of metadata;
receiving the federated computing task submitted by at least one of the at least two computing nodes, and splitting the federated computing task into a plurality of subtasks; and
distributing the plurality of subtasks to the at least two computing nodes so as to execute the plurality of subtasks between the at least two computing nodes.

2. The method according to claim 1, wherein the determining, in the plurality of computing nodes, at least two computing nodes that agree to execute a federated computing task, comprises:
constructing a data approval channel between the at least two computing nodes in the plurality of computing nodes, so that the at least two computing nodes perform a negotiation of data usage based on the plurality of metadata via the data approval channel;
constructing a task approval channel between the at least two computing nodes that achieve the negotiation of data usage, so that the at least two computing nodes that achieve the negotiation of data usage perform an approval of the federated computing task via the task approval channel; and
indicating the at least two computing nodes that achieve the approval of the federated computing task as the at least two computing nodes that agree to execute the federated computing task.

3. The method according to claim 2, wherein the constructing a data approval channel between the at least two computing nodes in the plurality of computing nodes, comprises:
receiving a data usage request transmitted from at least one of the at least two computing nodes as a data user node;
determining, a computing node in which data required to execute the federated computing task is located, as a data provider node according to the data usage request, and transmitting the data usage request to the data provider node; and
receiving a usage request response from the data provider node, and transmitting the usage request response to the data user node.

4. The method according to claim 3, wherein the constructing a task approval channel between the at least two computing nodes in the plurality of computing nodes, comprises:
receiving a modeling task request from the data user node in the at least two computing nodes;
transmitting the modeling task request to the data provider node; and
receiving a modeling request response from the data provider node, and transmitting the modeling request response to the data user node.

5. The method according to claim 1, wherein the federated computing task comprises a federated data query, a federated data analysis, and a federated model training executed based on the data in the data warehouse of each of the at least two computing nodes, and a federated prediction performed according to a model obtained from the federated model training;
or
wherein the metadata comprises a name of the data warehouse, a name of a data table stored in the data warehouse, and a field name, a field type, and a number of rows of the data table.

6. A method of federated computing, comprising:
acquiring a plurality of metadata from a coordination node, wherein the plurality of metadata are uploaded to the coordination node by a plurality of computing nodes, and the metadata of each computing node indicates features of data in a data warehouse of an associated computing node;
determining, from the plurality of computing nodes, a computing node that executes a first federated computing task cooperatively, as a data provider node, according to the plurality of metadata;
submitting the first federated computing task to the coordination node, so that the coordination node splits the first federated computing task into a plurality of first subtasks; and
receiving at least one first subtask in the plurality of first subtasks from the coordination node, and executing the at least one first subtask in cooperation with the data provider node.

7. The method according to claim 6, wherein the determining, from the plurality of computing nodes, a computing node that executes a first federated computing task cooperatively, as a data provider node, according to the plurality of metadata, comprises:
determining, from the plurality of computing nodes, a computing node in which data required to execute the first federated computing task is located, according to the plurality of metadata;
performing a negotiation of data usage with the computing node in which the data required to execute the first federated computing task is located, via a data approval channel constructed by the coordination node;
performing an approval of the federated computing task with the computing node that achieves the negotiation of data usage, via a task approval channel constructed by the coordination node; and
indicating the computing node that achieves the approval of the federated computing task as the data provider node.

8. The method according to claim 6, further comprising:
uploading local metadata to the coordination node, wherein the local metadata indicates features of data in a local data warehouse;
determining at least one of the plurality of computing nodes as a data user node that executes a second federated computing task cooperatively;
receiving, from the coordination node, at least one second subtask in the plurality of second subtasks split from the second federated computing task; and
executing the at least one second subtask in cooperation with the data user node.

9. The method according to claim 8, wherein the determining at least one of the plurality of computing nodes as a data user node that executes a second federated computing task cooperatively, comprises:
performing a negotiation of data usage with at least one of the plurality of computing nodes, via a data approval channel constructed by the coordination node;
performing an approval of the federated computing task with the computing node that achieves the negotiation of data usage, via a task approval channel constructed by the coordination node; and
indicating the computing node that achieves the approval of the federated computing task as the data user node that executes the second federated computing task cooperatively.

10. The method according to claim 7, wherein the performing a negotiation of data usage with the computing node in which the data required to execute the first federated computing task is located, via a data approval channel constructed by the coordination node, comprises:
transmitting a data usage request to the coordination node, wherein the data usage request comprises information of the computing node in which data required to execute the first federated computing task is located; and
receiving a usage request response from the coordination node.

11. The method according to claim 9, wherein the performing a negotiation of data usage with at least one of the plurality of computing nodes, via a data approval channel constructed by the coordination node, comprises:
receiving, from the coordination node, a data usage request transmitted by the at least one computing node; and
transmitting a usage request response to the coordination node in response to the at least one computing node being allowed to use the data in the local data warehouse.

12. The method according to claim 9, wherein the performing an approval of the federated computing task with the computing node that achieves the negotiation of data usage, via a task approval channel constructed by the coordination node, comprises:
receiving, from the coordination node, a modeling task request transmitted by the computing node that achieves the negotiation of data usage; and
transmitting a modeling request response to the coordination node in response to the computing node that achieves the negotiation of data usage being allowed to use data in the local data warehouse to perform modeling.

13. A device of federated computing, comprising:
a metadata management module configured to acquire a plurality of metadata from a plurality of computing nodes and publish the plurality of metadata, wherein the metadata indicates features of data in a data warehouse of the computing node;
a node determination module configured to determine, from the plurality of computing nodes, at least two computing nodes that agree to execute a federated computing task, wherein the at least two computing nodes are computing nodes that agree to execute the federated computing task based on the plurality of metadata;
a task processing module configured to receive the federated computing task submitted by at least one of the at least two computing nodes, and split the federated computing task into a plurality of subtasks; and
a task distribution module configured to distribute the plurality of subtasks to the at least two computing nodes so as to execute the plurality of subtasks between the at least two computing nodes.

14. An apparatus of federated computing, comprising:
a memory in which program instructions are stored; and
a processor configured to execute the program instructions to execute the method of federated computing as claimed in any of claims 1-12.

15. A non-transitory computer-readable storage medium storing computer executable instructions, which are configured to implement the method of federated computing of any of claims 1-12 when executed.
